# EUROPÄISCHE PATENTSCHRIFT

(11) **EP 0 262 325 B1**
(45) Veröffentlichungstag und Bekanntmachung des Hinweises auf die Patenterteilung: **21.04.1993**
(21) Anmeldenummer: 87110834.6
(22) Anmeldetag: 25.07.1987
(51) Int. Cl.: H04Q 1/14

(54) **Anordnung für Hauptverteiler**
Device for a distribution frame
Dispositif pour distributeur

(30) Priorität: 30.08.1986 DE 3629551
(43) Veröffentlichungstag der Anmeldung: 06.04.1988
(73) Patentinhaber: TELENORMA GMBH, 60326 Frankfurt am Main (DE)
(72) Erfinder: Krämer, Dieter, Dipl.-Ing., D-6271 Idstein-Heftrich (DE); Barkow, Helmut, D-6374 Steinbach (DE)

(56) Entgegenhaltungen:
- DE-A- 2 110 528
- DE-A- 3 335 193

## Beschreibung

Die Erfindung betrifft einen Trennverteiler für eine Fernmeldeanlage, welche eine Vielzahl von paarweise angeordneten elektrischen Anschlüssen aufweist, wobei jeweils ein Anschlußpaar mit entsprechenden Steckkontakten versehen ist, und dieses durch einen Kupplungsstecker elektrisch miteinander verbindbar ist, wovon ein erster Steckkontakt auf einer einschiebbaren Leiterplatte und ein zweiter Steckkontakt am, die Leiterplatte aufnehmenden Baugruppenrahmen angebracht ist und beide Steckkontakte sich fluchtend in gleicher Höhe gegenüberstehen.

Ein derartiger Trennverteiler ist bereits bekannt. So wird in der DE-A-21 10 528 ein Gestellrahmen beschrieben, bei welchem ein Trennverteiler dadurch realisiert ist, daß an der der Steckerseite einer Leiterplatte abgewandten Seite, und zwar im Bereich des Baugruppenrahmens und am Baugruppenrahmen selbst Steckkontakte derart angeordnet sind, daß sie sich fluchtend in gleicher Höhe gegenüberstehen, so daß zwischen den Steckkontakten mit Hilfe eines Trennsteckers eine elektrische Verbindung zwischen dem Kabel des Baugruppenrahmens und der Leiterplatte herstellbar ist. Bei dem bekannten Gestellrahmen handelt es sich um einen solchen zur Aufnahme von Geräten der Übertragungstechnik, wobei über die Kupplungsstecker der Anschluß an die Übertragungsleitung erfolgt.

In der DE-C-1027 243 wird ein Trenn- und Rangier-Lötösenstreifen mit abgeschirmten Kontaktsätzen beschrieben, bei welchem jeweils ein Anschlußpaar mit Hilfe eines Kupplungssteckers elektrisch miteinander verbunden werden kann. Zum Auftrennen der Leitung muß nur der Kupplungsstecker gezogen werden, während zu Prüfzwecken ein dem Kupplungsstecker gleichender Stecker aufgesteckt werden kann, welcher jedoch keine interne Verbindung aufweisen muß, um Prüfvergänge in beiden Richtungen von der Trennstelle aus durchführen zu können.

Wie bereits erwähnt, ist die Verdrahtung eines derartigen Trennverteilers aufwendig und zeitraubend. Die Aufgabe der vorliegenden Erfindung besteht nun darin, einen Trennverteiler anzugeben, bei welchem der Verdrahtungsaufwand drastisch vermindert wird.

Diese Aufgabe wird dadurch gelöst, daß die beiden Steckkontakte als Steckerstifte ausgebildet sind, daß der zweite Steckkontakt senkrecht zur Einschubrichtung an der den Führungsnuten gegenüberliegenden Seite eines eine oder mehrere Führungsnuten zum Einschieben der Leiterplatte aufweisenden Trägers angebracht ist und mit einem am Träger befindlichen elektrischen Anschlußelement elektrisch verbunden ist.

Dadurch, daß die Steckerstifte senkrecht zur Einschubrichtung der Leiterplatte angeordnet sind und die dazugehörigen Steckerstifte am Träger befestigt sind, welcher die Führungsnuten zum Einschieben der Leiterplatten aufweist, können jeweils für mehrere Anschluß- oder Verbindungsleitungen die Trennstecker an einer Leiterplatte angebracht werden, wodurch es möglich ist, auf einer Leiterplatte mehrere Teilnehmeranschlußschaltungen und/oder Verbindungsleitungsübertragungen unterzubringen. Weiterhin wird durch die Erfindung erreicht, daß direkt neben dem Kupplungsstecker der physikalische Anschluß der Anschluß- oder Verbindungsleitung erfolgen kann.

Weitere Vorteile ergeben sich aus den Unteransprüchen.

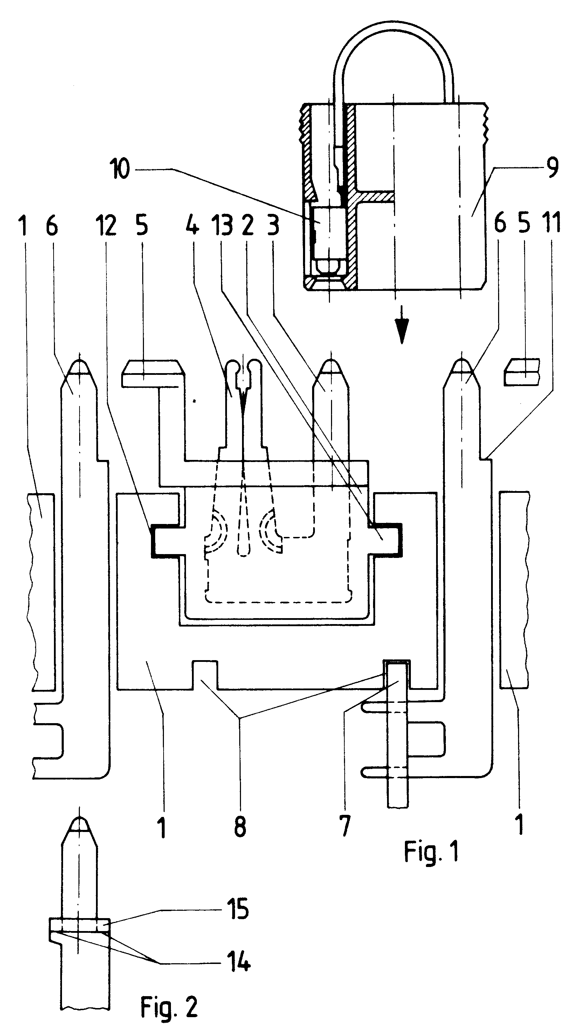

Die Erfindung wird anhand eines Ausführungsbeispiels näher erläutert, welches in der Zeichnung dargestellt ist. Es zeigt: Figur 1, der Trennverteiler in der Ansicht von vorn und Figur 2, eine besondere Ausführungsform des auf der Leiterplatte angebrachten Steckerstifts.

Die in Figur 1 gezeigte Ansicht zeigt den Träger 1 eines nicht gezeigten Baugruppenrahmens, und zwar in der Draufsicht, d. h. in Richtung des Einschiebens einer Leiterplatte in den Baugruppenrahmen. Der Träger 1 bildet die obere Führung der in den Baugruppenrahmen eingeschobenen Leiterplatten 7. Der Träger 1 kann derart ausgestaltet sein, daß er zwei oder auch mehrere Führungsnuten 8 für Leiterplatten 7 aufweist, wobei die Führungsnuten 8 derart angeordnet sind, daß bei mehreren nebeneinander am Baugruppenrahmen montierten Trägern 1 jeweils der gleiche Abstand der Leiterplatten 7 gegeben ist.

Der Träger 1 ist nach oben geöffnet und weist in der Öffnung seitliche Führungsnuten 12 auf, welche zur Aufnahme der Führungsleisten eines Einsatzes 2 dienen. Der Einsatz 2 kann in Richtung des Einschiebens der Leiterplatte in den Baugruppenrahmen in den Träger 1 eingeschoben werden, wobei durch die Führungsnuten 12 und die Führungsleisten 13 der Einsatz 2 in senkrechter Richtung gehalten wird. Der Einsatz 2 kann auf der dem Baugruppenrahmen zugewandten Seite nicht gezeigte Mittel zum Einrasten in den Baugruppenrahmen oder in dessen Grundplatte aufweisen, wodurch eine lösbare Befestigung in waagrechter Richtung möglich ist. Hierdurch besteht die Möglichkeit der Nachrüstung eines Baugruppenrahmens mit Einsätzen 2, wodurch Vorleistungen vermieden und eventuelle Reparaturen an dein Einsatz 2 erleichtert werden.

Der Einsatz 2 weist eine Drahtklemme 4, zum Einklemmen einer externen Leitungsader auf, die elektrisch mit dem Steckerstift 3 des Einsatzes 2 verbunden ist. Drahtklemme 4 und Steckerstift 3 können beispielsweise als einstückiges Stanzteil ausgebildet sein. Der Einsatz 2 kann nun eine Vielzahl von Anschlüssen aufnehmen, wobei derselbe mit einem Drahtfuhrungskamm 5 versehen ist.

Auf der Leiterplatte 7 ist ein Steckerstift 6 befestigt, welcher durch den Zwischenraum zwischen zwei Trägern 1 nach oben ragt, und mit der Höhe des Steckerstiftes 3 des Einsatzes 2 abschließt. Der Steckerstift 6 ist dabei derart auf der Leiterplatte 7 angebracht, daß dieser im eingeschobenen Zustand, d. h. über die nicht gezeigte Messer- oder Federleiste mit dem Baugruppenrahmen elektrisch verbunden ist, und mit dem Steckerstift 3 fluchtet, so daß über dem Kupplungsstecker 9 und dessen Kontakte 10 eine elektrische Verbindung hergestellt werden kann. Ebenso wie eine Vielzahl von Anschlüssen auf dem Einsatz 2 angebracht sein können, können auch eine Vielzahl von Steckerstiften 6 auf der Leiterplatte 7 angebracht werden. Der Steckerstift 6 kann ebenfalls als Stanzteil ausgebildet sein und ist mit einem Anschlag 11 für den Kupplungsstecker 9 versehen.

Zum Einhalten des Abstandes der relativ langen Steckerstifte 6 untereinander könnendiese mit einem Anschlag 14 versehen werden, welcher als Auflage für einen Distanzstreifen 15 dient. Der Distanzstreifen ist aus einer isolierenden Material gefertigt, weist entsprechende Öffnungen für den oberen Teil des Steckerstifts auf und hat eine Dicke die derart bemessen ist, daß die Oberseite des Distanzstreifens mit der Oberseite des Einsatzes 2 abschließt, so daß diese wieder den Anschlag für den Kupplungsstecker 9 bilden.

In der DE-A-33 35 193 ist eine Fernsprechvermittlungsanlage mit zumindest einem Gestell zur Aufnahme von einschiebbaren elektrischen Baugruppen und zumindest einer Verteilereinrichtungen zum Rangieren von Teilnehmeranschlüssen bekannt, bei welcher die Rangierleitungen unmittelbar zu den elektrischen Baugruppen der Gestelle geführt und mit diesen elektrisch verbunden sind. Bei dieser bekannten Fernsprechvermittlungsanlage sind sogenannte Verteilerbausteine vorhanden, welche bereits in der Nähe eines Baugruppenrahmens angeordnet sind. Im Gegensatz zu der vorliegenden Erfindung kann jedoch bei dieser bekannten Fernsprechvermittlungsanlage auf Leitungen zwischen den Verteilerbausteinen und den elektrischen Baugruppen der Gestelle nicht verzichtet werden.

## Patentansprüche

1. Trennverteiler für eine Fernmeldeanlage, welche eine Vielzahl von paarweise angeordneten elektrischen Anschlüssen aufweist, wobei jeweils ein Anschlußpaar mit entsprechenden Steckkontakten (3, 6) versehen ist und dieses durch einen Kupplungsstecker (9) elektrisch miteinander verbindbar ist, wovon ein erster Steckkontakt (6) auf einer einschiebbaren Leiterplatte (7) und ein zweiter Steckkontakt (3) am, die Leiterplatte (7) aufnehmenden Baugruppenrahmen (1) angebracht ist und beide Steckkontakte (3, 6) sich fluchtend in gleicher Höhe gegenüberstehen,
**dadurch gekennzeichnet,**
daß die beiden Steckkontakte als Steckerstifte (3, 6) ausgebildet sind, daß der zweite Steckkontakt (3) senkrecht zur Einschubrichtung an der den Führungsnuten gegenüberliegenden Seite eines eine oder mehrere Führungsnuten (8) zum Einschieben der Leiterplatte (7) aufweisenden Trägers (1) angebracht ist und mit einem am Träger (1) befindlichen elektrischen Anschlußelement elektrisch verbunden ist.

2. Trennverteiler nach Anspruch 1,
**dadurch gekennzeichnet,**
daß der zweite Steckkontakt (3) zusammen mit seinem Anschlußelement (4) in einem Einsatz (2) untergebracht ist, welcher in den Träger (1) einsetzbar ist.

3. Trennverteiler nach Anspruch 2,
**dadurch gekennzeichnet,**
daß der Einsatz (2) seitlich mit Führungsleisten (13) versehen ist, welche in Führungsnuten (12) des Trägers (1) passen, und daß der Einsatz (2) in der gleichen Richtung wie die Leiterplatte (7) in den Träger (1) einschiebbar ist.

4. Trennverteiler nach Anspruch 3,
**dadurch gekennzeichnet,**
daß der Einsatz (2) in der eingeschobenen Stellung am Träger (1) oder an einer anderen geeigneten Stelle, beispielsweise im die Leiterplatten aufnehmenden Baugruppenrahmen einrastbar ist.

5. Trennverteiler nach einem der Ansprüche 1 bis 4,
**dadurch gekennzeichnet,**
daß der Steckerstift (6) der Leiterplatte (7) einen Anschlag (11) für den Kupplungsstecker (9) aufweist, der mit der Oberseite des Einsatzes (2) fluchtet.

6. Trennverteiler nach Anspruch 5,
**dadurch gekennzeichnet,**
daß der Steckerstift (6) der Leiterplatte (7) einen Anschlag (14) aufweist, welcher als Auflage für einen Distanzstreifen (15) dient.

7. Trennverteiler nach Anspruch 6,
**dadurch gekennzeichnet,**
daß die Oberseite des auf dem Anschlag (14) liegenden Distanzstreifens (15) mit der Oberseite des Einsatzes (2) fluchtet.

8. Trennverteiler nach einem der Ansprüche 1 bis 7,
**dadurch gekennzeichnet,**
daß der Einsatz (2) einen Drahtführungskamm (5) aufweist.

9. Trennverteiler nach einem der Ansprüche 1 bis 8,
**dadurch gekennzeichnet,**
daß der Einsatz (2) und die Leiterplatte (7) mit einer Vielzahl von Steckerstiften (3, 6) versehen sind.

10. Trennverteiler nach einem der Ansprüche 1 bis 9,
**dadurch gekennzeichnet,**
daß eine Vielzahl von Trägern (1) vorgesehen sind, wobei Führungsnuten (8) derart angeordnet sind, daß bei mehreren nebeneinander am Baugruppenrahmen montierten Trägern jeweils der gleiche Abstand der Leiterplatten (7) gegeben ist.

## Claims

1. Disconnection distributor for a telecommunications installation, which comprises a plurality of electrical terminals arranged in pairs, wherein each terminal pair is provided with corresponding plug contacts (3, 6) and this is electrically connectible one with the other by way of a coupling plug (9), of which a first plug contact (6) is mounted on an insertable circuit board (7) and a second plug contact (3) on the subassembly frame (1) receiving the circuit board (7) and both plug contacts (3, 6) are disposed opposite one another in alignment and at the same height, characterised thereby that the two plug contacts are constructed as plug pins (3, 6), and that the second plug contact (3) is mounted, perpendicularly to the insertion direction, on that side of a carrier (1), which has one or more guide grooves (8) for the insertion of the circuit board (7), disposed opposite to the guide grooves and is electrically connected with an electrical terminal element disposed at the carrier (1).

2. Disconnection distributor according to claim 1, characterised thereby that the second plug contact (3) is accommodated together with its terminal element (4) in an insert (2), which is insertable into the carrier (1).

3. Disconnection distributor according to claim 2, characterised thereby that the insert (2) is provided laterally with guide strips (13), which fit into guide grooves (12) of the carrier (1), and that the insert (2) is insertable into the carrier (1) in the same direction as the circuit board (7).

4. Disconnection distributor according to claim 3, characterised thereby that the insert (2) is detentable in the inserted setting at the carrier (1) or at another suitable place, for example in the subassembly frame receiving the circuit boards.

5. Disconnection distributor according to one of the claims 1 to 4, characterised thereby that the plug pin (6) of the circuit board (7) has an abutment (11) for the coupling plug (9), which aligns with the upperside of the insert (2).

6. Disconnection distributor according to claim 5, characterised thereby that the plug pin (6) of the circuit board (7) has an abutment (14), which serves as a support for a spacer strip (15).

7. Disconnection distributor according to claim 6, characterised thereby, that the upper side of the spacer strip (15) lying on the abutment (14) aligns with the upper side of the insert (2).

8. Disconnection distributor according to one of the claims 1 to 7, characterised thereby that the insert (2) has a wire guiding comb (5).

9. Disconnection distributor according to one of the claims 1 to 8, characterised thereby that the insert (2) and the circuit board (7) are provided with a plurality of plug pins (3, 6).

10. Disconnection distributor according to one of the claims 1 to 9, characterised thereby that a plurality of carriers (1) are provided, wherein guide grooves (8) are arranged in such a manner that in the case of several carriers mounted on the subassembly frame and disposed alongside one another the same spacing of the circuit boards (7) is given each time.

## Revendications

1. Distributeur séparateur pour une installation de télécommunications, qui comporte une multiplicité de bornes électriques disposées par couples, dans lequel respectivement un couple de bornes est pourvu de contacts à enfichage correspondants (3,6) et les bornes du couple de bornes peuvent être raccordées électriquement entre elles par un connecteur de couplage (9), dont un premier contact à enfichage (6) est disposé sur une plaquette à circuits imprimés insérable (7) et un second contact à enfichage (3) est disposé sur le cadre porte-modules (1), qui loge la plaquette à circuits imprimés (7), et les deux contacts à enfichage (3,6) sont disposés en vis-à-vis en étant alignés à une même hauteur, caractérisé en ce que les deux contacts à enfichage sont réalisés sous la forme de broches de connexion (3,6), que le second contact à enfichage (3) est installé perpendiculairement à la direction d'insertion, sur la face, située en vis-à-vis des rainures de guidage, d'un support (1) comportant une ou plusieurs rainures de guidage (8) pour l'insertion de la plaquette à circuits imprimés (7), et est raccordé électriquement à un élément électrique de raccordement situé sur le support (1).

2. Distributeur séparateur selon la revendication 1, caractérisé en ce que le second contact à enfichage (3) est logé, ainsi qu'un élément de raccordement (4), dans un insert (2), qui peut être inséré dans le support (1).

3. Distributeur séparateur selon la revendication 2, caractérisé en ce que l'insert (2) comporte latéralement des barrettes de guidage (13), qui s'engagent dans des rainures de guidage (12) du support (1), et que l'insert (2) peut être inséré dans le support (1) dans la même direction que la plaquette à circuits imprimés (7).

4. Distributeur séparateur selon la revendication 3, caractérisé en ce que, lorsqu'il est dans sa position insérée dans le support (1) ou dans un autre emplacement approprié, par exemple dans le cadre porte-modules qui loge les plaquettes à circuits imprimés, l'insert (2) peut être encliqueté.

5. Distributeur séparateur selon l'une des revendications 1 à 4, caractérisé en ce que la broche de connexion (6) de la plaquette à circuits imprimés (7) possède une butée (11) pour le connecteur de couplage (9), qui est alignée avec la face supérieure de l'insert (2).

6. Distributeur séparateur selon la revendication 5, caractérisé en ce que la broche de connexion (6) de la plaquette à circuits imprimés (7) possède une butée (14), qui sert d'appui pour une bande-entretoise (15).

7. Distributeur séparateur selon la revendication 6, caractérisé en ce que la face supérieure de la bandeentretoise (15), qui prend appui sur la butée (14), est alignée avec la face supérieure de l'insert (2).

8. Distributeur séparateur selon l'une des revendications 1 à 7, caractérisé en ce que l'insert (2) possède un peigne de guidage de fils (5).

9. Distributeur séparateur selon l'une des revendications 1 à 8, caractérisé en ce que l'insert (2) et la plaquette à circuits imprimés (7) sont équipés d'une multiplicité de broches de connexion (3,6).

10. Distributeur séparateur selon l'une des revendications 1 à 9, caractérisé en ce qu'il est prévu une multiplicité de supports (1), les rainures de guidage (8) étant disposées de telle sorte que dans le cas de plusieurs supports installés côte-à-côte sur le cadre porte-modules, les plaquettes à circuits imprimés (7) sont séparées par la même distance respective.
